# EUROPEAN PATENT SPECIFICATION

(11) **EP 0 495 235 B1**
(45) Date of publication and mention of the grant of the patent: **22.05.1996**
(21) Application number: 91121992.1
(22) Date of filing: 20.12.1991
(51) Int. Cl.: D04H 1/54, G11B 23/033

(54) **Liner for floppy disk jacket**
Einlagestoff für Datenträgertasche
Doublure pour pochette de disques souples

(30) Priority: 18.01.1991 JP 4581/91
(43) Date of publication of application: 22.07.1992
(73) Proprietor: MITSUBISHI RAYON CO., LTD, Tokyo (JP); MRC KODA CO., LTD., Nukata-gun, Aichi (JP)
(72) Inventor: Takemae, Shigeru, c/o MRC KODA Co., Ltd., Koda-cho, Nukata-gun, Aichi (JP); Kusakabe, Shigenobu, c/o MRC KODA Co., Ltd., Koda-cho, Nukata-gun, Aichi (JP)
(74) Representative: Hansen, Bernd, Dr. Dipl.-Chem.

(56) References cited:
- EP-A- 0 049 732
- EP-A- 0 168 523
- GB-A- 2 199 347
- US-A- 4 586 606

## Description

The present invention relates to a liner for a floppy disc jacket according to the preamble of claim 1. Such a liner is known from GB-A-2 199 347.

A floppy disk used for data processing in a computer is protected by a jacket of a polyvinyl chloride resin or a hard case jacket molded from an ABS resin having a liner arranged on the inner side of the jacket.

The liner exerts an important function of avoiding the wear of or damage to the surface of the disk, and of cleaning the surface of the disk. Accordingly, a variety of liners have been proposed.

For example, U.S. Patent No. 4,586,606, U.S. Patent No. 4,610,352, and Japanese Patent Application Laid-open No. 61-258057 (which corresponds to the above-mentioned GB-A-2 199 347) have proposed liners having a structure causing little abrasion of a disk, in which non-thermoplastic fibers such as rayon or cotton fibers are arranged on the surface layer contacting with the disk, thermoplastic fibers such as polyester fibers having a low melting point or nylon 6 fibers are arranged in the intermediate layer to maintain a high fabric strength of the liner, and the liner is partially heat-pressed.

The basic conception of the prior art is to prevent a formation of wear dust of a liner generated by contact with a disk, and to avoid an inhibition of a transmission of information in a reading/writing head of a disk drive of a computer. Accordingly, a non-thermoplastic fibers causing little abrasion of the disk are disposed on the surface layer of the liner contacting with the disk. However, the conventional liners have a fatal defect in that the shape stability thereof is poor.

The "shape stability" referred to herein means not only a stability necessary for maintaining a shape of a liner against a tensile stress when the liner is attached to a jacket made of a polyvinyl chloride resin or ABS resin, but also a shape stability under various environmental conditions (temperatures and humidities) wherein a floppy disk is practically used and a shape stability against dimensional creep when a nonwoven fabric is cut under a tension and the tension is released from the nonwoven fabric at the time of the preparation of a liner.

In this connection, conventional liners are defective in that the shape stability under various enviromental conditions is very poor. Shape changes caused by the changes in environmental conditions (temperatures and humidities) practically mean a shrinkage or elongation in the warp or weft direction, or increase or decrease of the thickness of a liner.

If a shrinkage of a liner is generated in the warp or weft direction, a lifter which is a very important part for maintaining a rotation torque and for cleaning the disk surface and arranged in a jacket, for example, of a 3.5-inch floppy disk is pressed down, resulting in an abnormal reduction of the torque and lowering of the cleaning effect which is an important function of the liner, and therefore, the performance of the floppy disk is considerably lowered.

In contrast, if an elongation of the liner occurs, a contact between the disk and liner occurs at other portion than that of the lifter, resulting in an abnormal rise of the torque. In the case of an 8-inch or 5.25-inch floppy disk, because of the difference in the shrinkage or elongation between a jacket and a liner, concavities or waves are formed in the jacket.

Changes in the thickness of a liner will also cause similar problems.

Thus, the stability of the liner against the environmental conditions is very important. However, this fact is not taken into consideration at all in designing of conventional liners.

An object of the present invention is to provide a disk with a liner having an improved shape stability under various environmental conditions.

The object and others as will become apparent from the following disclosure are achieved by the present invention which provides a liner for a floppy disk jacket, comprising a nonwoven fabric having an outermost layer composed of cellulose fibers and an inner layer composed of a fiber mixture containing nylon 6 and cellulose fibers, wherein the non-woven fabric is partially heat-pressed, characterized in that the fiber mixture comprises core-sheath conjugate fibers comprising nylon 6 as the sheath component and a polyester as the core component.

The most important requirement of the present invention resides in that core-sheath conjugate fibers comprising a nylon 6 as the sheath component and a polyester as the core component are used as the binder fibers. If fibers composed of a single component of a nylon 6, as disclosed in U.S. Patent No. 4,610,352, are used as the binder fibers, an excellent heat bondability to cellulose fibers is attained, but since the degree of swelling with water of the nylon 6 fiber is substantially at the same level as that of the cellulose fiber, the shape stability against changes of temperature and humidity is very poor.

As the fiber having no dependency on the temperature or humidity and having an adhesiveness to a cellulose fiber, there can be mentioned a polyester fiber having a low melting point and a polypropylene fiber. These fibers, however, tend to form molten beads when thermally bonded to a non-thermoplastic fiber, and there is a risk that the beads will fall onto the disc.

A polyester type core-sheath conjugate fiber in which the melting point of the sheath is lower than that of the core does not form molten beads as mentioned above, but the bondability of the polyester conjugate fiber to a cellulose fiber is much lower than that of a nylon 6 fiber.

In contrast, the conjugate fibers used in the present invention are excellent both in heat bondability and shape stability, since a nylon 6 having an excellent bondability to a cellulose fiber is arranged in the sheath and a polyester having an excellent shape stability is arranged in the core of the fibers.

The ratio between the core and the sheath in the core-sheath conjugate fibers used in the present invention can be appropriately selected according to a particular use of a liner from the fibers. However, in the present invention, since the sheath component of the conjugate fiber is used for bonding the fibers by heat fusion (for the portions partially heat-pressed and the portions not heat-pressed of a liner) and a shape of the fibers must be retained even after the bonding, the ratio mentioned above is preferably in the range of from 1/3 to 3/1.

In the present invention, the fibers to be mixed with the conjugate fibers mentioned above and the fibers arranged as the outermost layer must provide an excellent function of cleaning the disk surface, cause no damage to the disk surface, and do not adhere to the disk surface.

From this viewpoint, a cellulose fiber is preferably used, and a rayon fiber is especially preferably used. Preferably, the outermost layer of the liner is composed solely of cellulose fibers. As the rayon fiber, a titanium oxide-containing rayon fiber, titanium oxide-free bright rayon fiber, high-tenacity rayon fiber and polynosic fiber are selected according to the disk.

The liner of the present invention can have a three-layer structure as disclosed in U.S. Patent No. 4,610,352, but to enhance the shape stability, there is preferably adopted a multi-layer structure in which the mixing ratio of the core-sheath conjugate fibers is gradually decreased toward the exterior from the interior of the liner. Preferably, the inner layer has a multi-layer structure, a central layer thereof being composed of about 50% by weight of the conjugate fibers.

In a liner of the present invention, the core-sheath conjugate fibers used as the binder fiber comprising a polyester as the core and a nylon 6 as the sheath retain a fibrous shape even after heat treatments and show an excellent shape stability against the changes in environmental conditions (changes of the temperature and relative humidity). Moreover, in the present invention, molten beads which will be formed when binder fibers composed of a single component are used are not formed. Furthermore, an excellent adhesion of the conjugate fibers to cellulose fibers is attained. Thus, a liner of the present invention has great advantages in several aspects over conventional liners.

Now, the present invention will be described in further detail with reference to Examples. However, it should be understood that the present invention is by no means restricted by such specific Examples.

### Example 1

By using titanium oxide-containing rayon fibers having a fineness of 0,167·10⁻⁶ kg/m (1.5 denier) and a length of 51 mm as the cellulose fiber and core-sheath conjugate fibers comprising a polyester as the core and a nylon 6 as the sheath and having a fineness of 0,22·10⁻⁶ kg/m (2.0 denier) and a length of 51 mm (core/sheath ratio of 1/1, core melting point of 265°C and sheath melting point of 220°C) as the conjugate fiber, a nonwoven fabric for a liner was prepared in the following manner. Namely, seven cards were arranged, and fibers composed solely of the rayon fibers were supplied to the first and seventh cards, a fiber mixture comprising 90% by weight of the rayon fibers and 10% by weight of the core-sheath conjugate fibers was supplied to the second and sixth cards, a fiber mixture comprising 70% by weight of the rayon fibers and 30% by weight of the core-sheath conjugate fibers was supplied to the third and fifth cards and a fiber mixture comprising 50% by weight of the rayon fibers and 50% by weight of the core-sheath conjugate fibers was supplied to the fourth card. Webs discharged from the respective cards were overlapped with one another, and partially heat-pressed by a pair of heat-pressing rollers (a roll having concavities and convexities on its surface and another roll having a flat surface) at a roller temperature of 220°C. Then, a tenter treatment was carried out at 180°C (the residence time was 1 minute) to obtain a nonwoven fabric for a liner.

The nonwoven fabric was subjected to a test for the shape stability thereof against the changes in environmental conditions. The results are shown in Table 1.

**Table 1**

| | |
|---|---|
| Thickness increase ratio | 5% |
| Percent shrinkage | |
| in warp direction | 1% |
| in weft direction | 0% |

### Shape Stability Test:

A shape stability test was conducted by measuring the dimensions of a sample fabric before and after the sample was allowed to stand at a temperature of 23°C and a relative humidity of 60% for 3 hours and then further allowed to stand at a temperature of 60°C and a relative humidity of 90% for 3 hours.

Also, a liner from the nonwoven fabric was subjected to a torque test under the same environmental conditions as adopted for the shape stability test by using a 3.5-inch floppy desk according to the procedure explained below. It was found that the torque was increased by only about 0.8 g·cm over the initially set value of 12 g·cm.

### Torque test:

A liner from a sample nonwoven fabric was attached to a 3.5-inch floppy disk and a jacket was assembled. The measurement was conducted at 360 rpm by using a rotary torque meter, and when 5 minutes had passed from the start of the test, the value of the meter was read.

Furthermore, the 3.5-inch floppy disk was subjected to the actual 10,000,000-pass test to determine the durability of the floppy disk according to the procedure explained below and the disk surface was observed. It was found that no damage had occurred thereto and no adhering substance was present, and the appearance was the same as the initial appearance.

### Actual 10,000,000 pass test:

This test was a continuous test carried out at a rotation rate of 360 rpm, a set torque of 12 g.cm, a temperature of 23°C and a relative humidity of 60% until the rotation number reached 10,000,000.

### Comparative Example 1

A nonwoven fabric for a liner was prepared in the same manner as described in Example 1 except that nylon 6 fibers having a fineness of 0,22·10⁻⁶ kg/m (2 denier) and a length of 51 mm were used as the binder fibers instead of the core-sheath conjugate fibers comprising a polyester as the core and nylon 6 as the sheath.

By using a nonwoven fabric thus obtained, the torque test was carried out in the same manner as described in Example 1. It was found that the torque value was increased by 8 g·cm over the initially set value of 12 g·cm

After the torque test, many convex-concave wrinkles formed by an elongation of the nonwoven fabric of the liner were observed.

## Claims

1. A liner for a floppy disc jacket, comprising a non-woven fabric having an outermost layer composed of cellulose fibers and an inner layer composed of a fiber mixture containing nylon 6 and cellulose fibers wherein the non-woven fabric is partially heat-pressed, characterized in that the fiber mixture comprises core-sheath conjugate fibers comprising nylon 6 as the sheath component and a polyester as the core component.

2. The liner according to claim 1, wherein the ratio of the core component to the sheath component in the conjugate fibers is from 1/3 to 3/1.

3. The liner according to claim 1 or 2, wherein the mixing ratio of the conjugate fibers is gradually decreased toward the exterior from the interior of the liner.

4. The liner according to any one of the claims 1 to 3, wherein the outermost layer of the liner is composed solely of cellulose fibers.

5. The liner according to any one of the claims 1 to 4, wherein the inner layer has a multi-layer structure, a central layer thereof being composed of about 50 % by weight of cellulose fibers and about 50 % by weight of the conjugate fibers.

## Patentansprüche

1. Futter für eine Diskettenhülle, das ein Gewebevlies mit einer äußersten Schicht, zusammengesetzt aus Cellulosefasern, und einer inneren Schicht, zusammengesetzt aus einer Fasermischung, die Nylon-6-und Cellulosefasern enthält, umfaßt, wobei das Gewebevlies teilweise hitzegepreßt ist, dadurch gekennzeichnet, daß die Fasermischung konjugierte Kern-Mantel-Fasern umfaßt, die Nylon-6 als die Mantelkomponente und einen Polyester als die Kernkomponente umfassen.

2. Futter nach Anspruch 1, dadurch gekennzeichnet, daß das Verhältnis der Kernkomponente zu der Mantelkomponente in den konjugierten Fasern von 1/3 bis 3/1 ist.

3. Futter nach Anspruch 1 oder 2, dadurch gekennzeichnet, daß das Mischungsverhältnis der konjugierten Fasern allmählich vom Inneren des Futters zum Äußeren hin abnimmt.

4. Futter nach einem der Ansprüche 1 bis 3, dadurch gekennzeichnet, daß die äußerste Schicht des Futters nur aus Cellulosefasern zusammengesetzt ist.

5. Futter nach einem der Ansprüche 1 bis 4, dadurch gekennzeichnet, daß die innere Schicht eine Mehrschichtstruktur hat, wobei eine Mittelschicht derselben zu etwa 50 Gew.% aus Cellulosefasern und etwa 50 Gew.% aus den konjugierten Fasern zusammengesetzt ist.

## Revendications

1. Doublure pour enveloppe de disquette souple, comprenant une étoffe non tissée ayant une couche la plus externe composée de fibres de cellulose et une couche interne composée d'un mélange de fibres contenant du nylon 6 et des fibres de cellulose, l'étoffe non tissée étant partiellement thermo-pressée, caractérisée en ce que le mélange de fibres comprend des fibres conjuguées coeur-gaine comprenant du nylon 6 en tant que constituant de gaine et un polyester en tant que constituant de coeur.

2. Doublure selon la revendication 1, dans laquelle le rapport du constituant de coeur au constituant de gaine dans les fibres conjuguées est de 1/3 à 3/1.

3. Doublure selon la revendication 1 ou 2, dans laquelle la proportion de mélange des fibres conjuguées est progressivement diminuée vers l'extérieur depuis l'intérieur de la doublure.

4. Doublure selon l'une quelconque des revendications 1 à 3, dans laquelle la couche la plus externe de la doublure est composée seulement de fibres de cellulose.

5. Doublure selon l'une quelconque des revendications 1 à 4, dans laquelle la couche interne a une structure multicouche, une couche centrale de celle-ci étant composée d'environ 50 % en poids de fibres de cellulose et d'environ 50 % en poids des fibres conjuguées.
